# EUROPEAN PATENT APPLICATION

(11) **EP 4 401 185 A1**
(43) Date of publication of application: **17.07.2024**
(21) Application number: 24150729.2
(22) Date of filing: 08.01.2024
(51) Int. Cl.: H01M 10/04, H01M 10/0585, H01M 50/242, H01M 10/052

(54) **METHOD FOR PRODUCING BATTERY MODULE AND BATTERY MODULE**

(30) Priority: 16.01.2023 JP 2023004532
(71) Applicant: TOYOTA JIDOSHA KABUSHIKI KAISHA, Toyota-shi, Aichi-ken, 471-8571 (JP)
(72) Inventor: ISHIKAWA, Shotaro, Toyota-shi, 471-8571 (JP); YAMADA, Atsushi, Toyota-shi, 471-8571 (JP)
(74) Representative: D Young & Co LLP

(57) **Abstract**

A main object of the present disclosure is to provide a method for producing a method for producing a battery module wherein batteries are well joined. The present disclosure achieves the object by providing the method including: a preparing step of preparing a plurality of battery; a layered body forming step of forming a layered body by arranging an intermediate member between a pair of the battery adjacent to each other in a thickness direction; and a joining step of joining the pair of the battery in the layered body using an adhesive agent, wherein the intermediate member includes a frame structure when viewed from the thickness direction; the intermediate member includes a communicating part that communicates an inside and an outside of the frame structure; and the joining step includes an injecting treatment of injecting the adhesive agent into the inside of the frame structure via the communicating part.

## Description

### Technical Field

The present disclosure relates to a method for producing a battery module and a battery module.

### Background Art

A battery module in which a plurality of battery, which includes a plurality of electrode layered in a thickness direction, is layered has been known. For example, Patent Literature 1 discloses a battery module with a structure in which multiple of plate-shaped cells are filled, wherein a Velcro tape is adhered between each battery cells as an adhesive member that inhibits slipping due to external impact and absorbs the impact. Also, although it is not a technique relating to a battery, Patent Literature 2 discloses a method for producing a layered body that is an image display device, wherein two substrates are adhered interposing a layer formed of a light and thermosetting resin composition.

### Citation List

### Patent Literatures

Patent Literature 1: Japanese Patent Application Laid-Open (JP-A) No. 2007-258180
Patent Literature 2: JP-A No. 2017-149135

### Summary of Disclosure

### Technical Problem

In the battery module with a plurality of batteries layered, in order to prevent the batteries from shifting, a pair of batteries are considered to be joined by arranging an adhesive agent layer between the pair of batteries adjacent to each other in a thickness direction. Meanwhile, the surface of a battery is not completely flat, but there is unevenness such as waviness. For this reason, the thickness of the adhesive agent layer tends to be uneven, and the batteries may not be sufficiently joined where the adhesive agent layer is thin.

The present disclosure has been made in view of the above circumstances, and a main object thereof is to provide a method for producing a battery module wherein batteries are joined well.

### Solution to Problem

[1] A method for producing a battery module comprising: a preparing step of preparing a plurality of battery; a layered body forming step of forming a layered body by arranging an intermediate member between a pair of the battery adjacent to each other in a thickness direction; and a joining step of joining the pair of the battery in the layered body using an adhesive agent, wherein the intermediate member includes a frame structure when viewed from the thickness direction; the intermediate member includes a communicating part that communicates an inside and an outside of the frame structure; and the joining step includes an injecting treatment of injecting the adhesive agent into the inside of the frame structure via the communicating part.
[2] The method for producing a battery module according to [1], wherein the joining step includes a degassing treatment of degassing the inside via the communicating part before the injecting treatment; and when V₁ designates a volume of a gas degassed by the degassing treatment and V₂ designates a volume of the adhesive agent to be injected by the injecting treatment, the V₁ and the V₂ satisfy V₂ ≤ V₁.
[3] The method for producing a battery module according to [1] or [2], wherein the adhesive agent contains a thermosetting resin; the joining step includes a curing treatment of curing the adhesive agent after the injecting treatment; and the curing treatment is a treatment of curing the adhesive agent by a heat generated by charging or discharging of the battery.
[4] The method for producing a battery module according to any one of [1] to [3], wherein the pair of the battery in the layered body are electronically connected to each other interposing the intermediate member.
[5] The method for producing a battery module according to any one of [1] to [4], wherein the battery includes a plurality of electrode layered in the thickness direction, and includes a bipolar electrode as the electrode.
[6] The method for producing a battery module according to any one of [1] to [5], wherein a shape of the battery in a plan view when viewed from the thickness direction is a square; and a length of each side configuring the square is 30 cm or more.
[7] The method for producing a battery module according to any one of [1] to [6], wherein the battery includes a plurality of electrode layered in the thickness direction, and a laminate-type outer package that seals the plurality of electrode.
[8] A battery module comprising: a plurality of battery arranged in a thickness direction; and an intermediate member arranged between a pair of the battery adjacent to each other in the thickness direction, wherein the intermediate member includes a frame structure when viewed from the thickness direction; the intermediate member includes a communicating part that communicates an inside and an outside of the frame structure; and the battery module includes an adhesive agent layer that joins the pair of the battery, in the inside.

### Advantageous Effects of Disclosure

The present disclosure exhibits an effect of obtaining a battery module wherein batteries are joined well.

### Brief Description of Drawings

FIGS. 1A to 1C are schematic perspective views exemplifying the method for producing a battery module in the present disclosure.
FIGS. 2A and 2B are schematic cross-sectional views explaining the effect in the present disclosure.
FIG. 3 is a schematic cross-sectional view exemplifying the electrode in the present disclosure.
FIG. 4 is a schematic cross-sectional view exemplifying the battery in the present disclosure.
FIG. 5 is a schematic cross-sectional view exemplifying the battery in the present disclosure.
FIGS. 6A to 6C are schematic cross-sectional views exemplifying the preparing step in the present disclosure.
FIGS. 7A and 7B are schematic plan view and a schematic side view exemplifying the intermediate member in the present disclosure.
FIGS. 8A and 8B are schematic plan views exemplifying the intermediate member in the present disclosure.
FIGS. 9A and 9B are schematic side views exemplifying the intermediate member in the present disclosure.
FIGS. 10A and 10B are schematic plan views exemplifying the injecting treatment in the present disclosure.

### Description of Embodiments

The embodiments in the present disclosure will be hereinafter explained in details with reference to drawings. Each drawing described as below is a schematic view, and the size and the shape of each portion are appropriately exaggerated in order to be understood easily. Furthermore, in the present description, upon expressing an embodiment of arranging one member with respect to the other member, when it is expressed simply "on" or "below", both of when the other member is directly arranged on or below the one member so as to contact with each other, and when the other member is arranged above or below the one member interposing an additional member, can be included unless otherwise described.

### A. Method for producing battery module

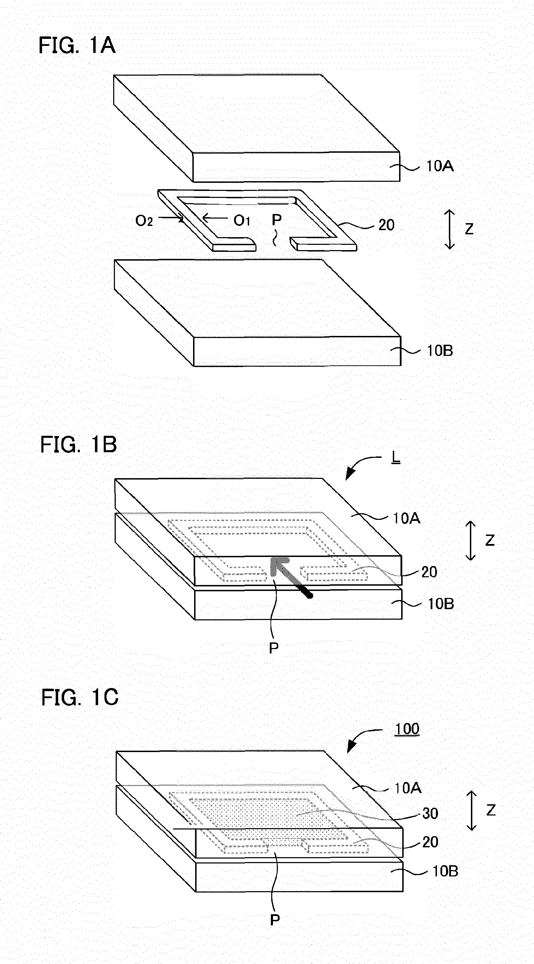

FIGS. 1A to 1C are schematic perspective views exemplifying the method for producing a battery module in the present disclosure. First, as shown in FIGS. 1A and 1B, a plurality of battery 10 (10A, 10B) is prepared, and intermediate member 20 is arranged between the battery 10A and the battery 10B to form layered body L (preparing step, layered body forming step). When viewed from a thickness direction Z, the intermediate member 20 has a frame structure including internal outer periphery O₁ and external outer periphery O₂. Also, the intermediate member 20 includes communicating part P that communicates an inside and an outside of the frame structure. Next, as shown in FIG. 1C, the battery 10A and the battery 10B in the layered body L are joined using an adhesive agent (joining step). In specific, an injecting treatment is performed in which the adhesive agent is injected into the inside of the frame structure via the communicating part P. Thereby, battery module 100 is obtained.

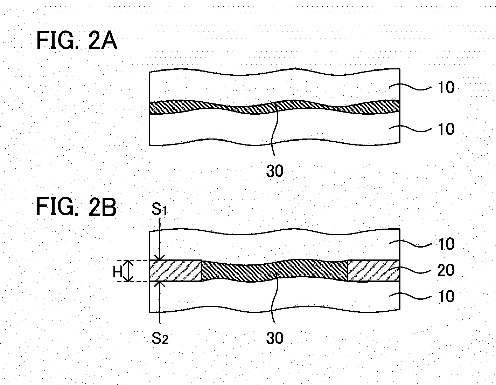

According to the present disclosure, the intermediate member with the frame structure is used as well as the adhesive agent is injected into the inside of the frame structure, and thus a battery module in which the batteries are joined well can be obtained. As described above, in the battery module with a plurality of batteries layered, in order to prevent the batteries from shifting, a pair of batteries are considered to be joined by arranging an adhesive agent layer between the pair of batteries adjacent to each other in a thickness direction. Meanwhile, as shown in FIG. 2A, the surface of battery 10 is not completely flat, but there is unevenness such as waviness. For this reason, when adhesive agent layer 30 is formed between a pair of batteries adjacent to each other, the thickness of the adhesive agent layer 30 tends to be uneven, and the batteries may not be sufficiently joined where the adhesive agent layer 30 is thin. In particular, when the battery is large-scaled, the unevenness present on the surface of the battery 10 will be bigger, which makes it difficult to join batteries well.

In contrast, as shown in FIG. 2B, in the present disclosure, the intermediate member 20 is used, and thus a sufficient space can be arranged between the pair of the battery 10 adjacent to each other. For this reason, even when there is unevenness on the surface of the battery 10, the adhesive agent layer 30 is prevented from being too thin. As a result, a battery module in which batteries are joined well can be obtained. In particular, even when the battery is large-scaled, the battery module in which batteries are joined well can be obtained. Also, since the intermediate member 20 has the frame structure, leakage of the adhesive agent from the inside of the frame structure can be inhibited when the adhesive agent is injected into the inside of the frame structure. Also, in the present disclosure, the intermediate member is arranged between the pair of batteries adjacent to each other to form the layered body, and then the adhesive agent is injected into the inside of the intermediate member via the communicating part. In the step of producing the layered body, positional relation of the pair of batteries adjacent to each other can be arranged accurately, and thus the positional shifting of the batteries can be inhibited.

### 1. Preparing step

The preparing step in the present disclosure is a step of preparing a plurality of battery.

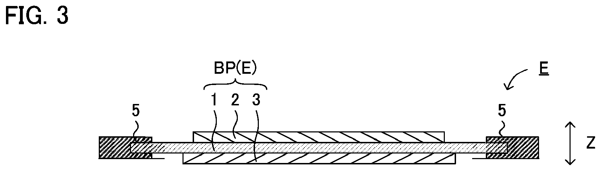

The battery in the present disclosure usually includes an electrode. The electrode includes a current collector, and an electrode layer (cathode active material layer or anode active material layer) arranged on at least one surface of the current collector. FIG. 3 is a schematic cross-sectional view exemplifying the electrode in the present disclosure. As shown in FIG. 3, electrode E is, for example, bipolar electrode BP including current collector 1, cathode active material layer 2 arranged on one surface of the current collector 1, and anode active material layer 3 arranged on the other surface of the current collector 1.

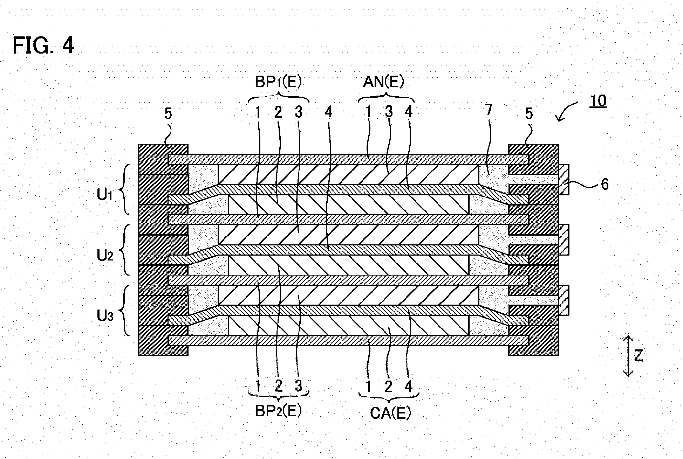

FIG. 4 is a schematic cross-sectional view exemplifying the battery in the present disclosure. As shown in FIG. 4, battery 10 preferably includes a plurality of electrode E layered in a thickness direction Z. The battery 10 shown in FIG. 4 includes, as the electrode E, bipolar electrode BP₁, bipolar electrode BP₂, cathode side end electrode CA and anode side end electrode AN. The bipolar electrode BP₁ and the bipolar electrode BP₂ respectively include current collector 1, cathode active material layer 2 arranged on one surface of the current collector 1, and anode active material layer 3 arranged on the other surface of the current collector 1. The cathode side end electrode CA includes current collector 1 and cathode active material layer 2 arranged on one surface of the current collector 1. The anode side end electrode AN includes current collector 1, and anode active material layer 3 arranged on one surface of the current collector 1. Meanwhile, although not illustrated in particular, the battery in the present disclosure may not include the bipolar electrode.

As shown in FIG. 4, battery 10 is usually provided with power generating unit U (U₁ to U₃). The power generating unit U includes cathode active material layer 2, anode active material layer 3, and separator (electrolyte layer) 4 arranged between the cathode active material layer 2 and the anode active material layer 3. The power generating unit U shown in FIG. 4 is sealed with sealing member 5 and cover member 6, and the inside of the power generating unit U is filled with liquid electrolyte 7. As a result, the cathode active material layer 2, the anode active material layer 3, and the separator 4 are respectively impregnated with the liquid electrolyte. Also, the battery in the present disclosure may include one of the power generating unit, and may include two or more thereof.

The battery 10 shown in FIG. 4 includes a plurality of power generating units (U₁, U₂, U₃) layered in thickness direction Z. As shown in FIG. 4, the plurality of power generating units may be connected to each other in series. Also, although not illustrated in particular, the plurality of power generating units may be connected to each other in parallel. The plurality of power generating units are each independent so that the liquid electrolyte does not circulate to each other. In FIG. 4, the plurality of power generating units U₁ to U₃ are each independent so that the liquid electrolyte does not circulate to each other. For example, the power generating unit U₁ and the power generating unit U₂ are divided by the current collector 1 and the seal member 5, and thus are each independent. As shown in FIG. 4, the battery 10 preferably includes a plurality of electrode E layered in the thickness direction Z, and the seal member 5 arranged along the outer periphery of the plurality of electrode E, when viewed from the thickness direction Z.

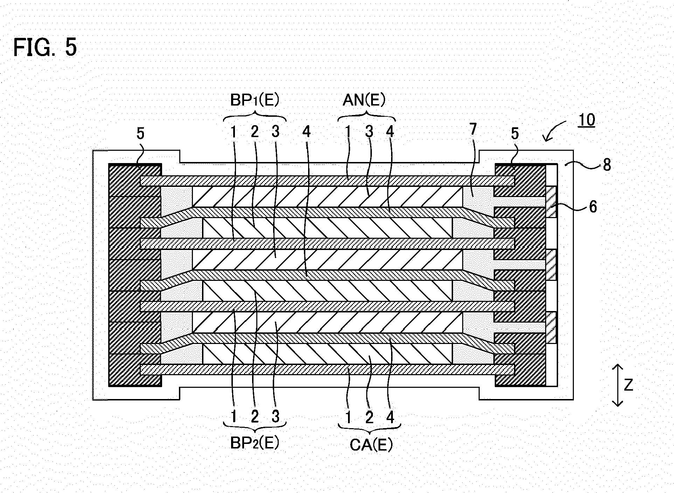

As shown in FIG. 5, the battery 10 may include a plurality of electrode E layered in the thickness direction Z, and laminate-type outer package 8 that seals the plurality of electrode E. In FIG. 5, the electrode body including the plurality of electrode E and the seal member 5 is sealed with the laminate-type outer package 8. The laminate-type outer package is, for example, preferably a seat of layers in the order of an inner resin layer, a metal layer (such as an aluminum layer) and an outer resin layer.

The shape of the battery in a plan view (shape viewed from the thickness direction) is, for example, square such as foursquare. The length of each side configuring the shape of the battery in a plan view is, for example, 30 cm or more, may be 60 cm or more, and may be 1 m or more. Meanwhile, the length of the each side is, for example, 3 m or less. The battery in the present disclosure is typically a lithium ion secondary battery.

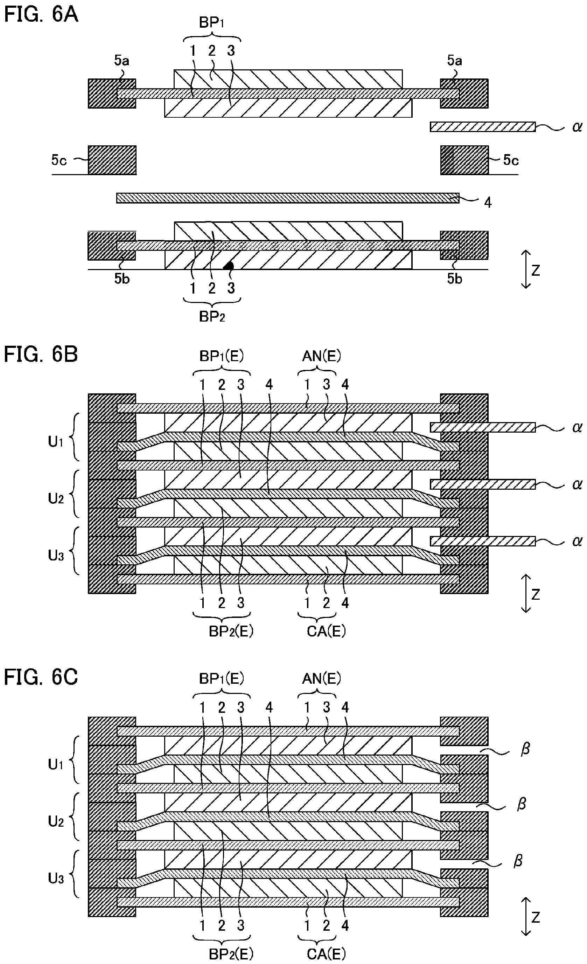

FIGS. 6A to 6C are schematic cross-sectional views exemplifying the preparing step in the present disclosure. First, as shown in FIG. 6A, bipolar electrode BP₁ and bipolar electrode BP₂ are prepared. The bipolar electrode BP₁ and the bipolar electrode BP₂ respectively include frame member 5a and 5b for forming seal member, arranged along with the outer periphery of the current collector 1. Next, the anode active material layer 3 in the bipolar electrode BP₁ and the cathode active material layer 2 in the bipolar electrode BP₂ are faced to each other interposing separator 4. On this occasion, at least a part of the outer periphery of the separator 4 is arranged between the frame member 5a and the frame member 5b. Also, as shown in FIG. 6A, nest α and frame member (spacer) 5c are arranged between the frame member 5a in the bipolar electrode BP₁ and the frame member 5b in the bipolar electrode BP₂. Next, although not illustrated in particular, cathode side end electrode CA and anode side end electrode AN are also layered. After that, a plurality of frame members layered are welded to form the seal member 5. In this manner, a layered member shown in FIG. 6B is obtained. Next, as shown in FIG. 6C, by pulling out the nest α from the obtained layered member, penetration hole β that penetrates the seal member 5 is formed. Next, although not illustrated in particular, a liquid electrolyte is injected from the penetration hole, and after the injection, the penetration hole is sealed with a resin. In this manner, battery 10 shown in FIG. 4 is obtained.

### 2. Layered body forming step

The layered body forming step in the present disclosure is a step of forming a layered body by arranging an intermediate member between a pair of the battery adjacent to each other in a thickness direction.

The intermediate member is arranged between a pair of the battery. There are no particular limitations on the material of the intermediate member, and examples thereof may include a metal, a resin, and a ceramic. Also, the intermediate member may include electron conductivity, and may include insulation properties. When the intermediate member includes electron conductivity, the pair of the battery in the layered body may be electronically connected interposing the intermediate member. In other words, the intermediate member may be used as a conductive plate. The pair of the battery in the layered body may be connected in series and may be connected in parallel interposing the intermediate member.

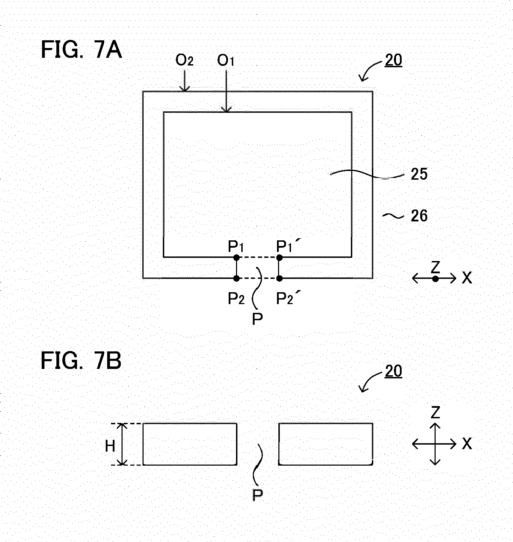

FIG. 7A is a schematic plan view exemplifying the intermediate member in the present disclosure, and FIG. 7B is a schematic side view exemplifying the intermediate member in the present disclosure. As shown in FIG. 7A, when viewed from the thickness direction Z, the intermediate member 20 has a frame structure including internal outer periphery O₁ and external outer periphery O₂. Also, as shown in FIG. 7A, a region surrounded by the internal outer periphery O₁ of the frame structure is defined as inside 25 of the frame structure. Meanwhile, a region other than the region surrounded by the external outer periphery O₂ of the frame structure is defined as outside 26 of the frame structure. Communicating part P is a part that communicates the inside 25 and the outside 26 of the frame structure. Also, the communicating part P usually extends to a direction orthogonal to the thickness direction.

Here, as shown in FIG. 7A, the internal outer periphery O₁ of the frame structure may be discontinuous due to the communicating part P. In such a case, the discontinuous part may be approximated by a straight line connecting the inner edges of the communicating part P to specify the internal outer periphery O₂. In specific, the internal outer periphery O₁ shown in FIG. 7A is discontinuous due to the communicating part P, but the discontinuous part can be approximated by a straight line connecting inner edge P₁ and inner edge P₁' of the communicating part P to specify the internal outer periphery O₁.

Similarly, as shown in FIG. 7A, the external outer periphery O₂ of the frame structure may be discontinuous due to the communicating part P. In such a case, the discontinuous part may be approximated by a straight line connecting the outer edges of the communicating part P to specify the external outer periphery O₂. In specific, the external outer periphery O₂ shown in FIG. 7A is discontinuous due to the communicating part P, but the discontinuous part can be approximated by a straight line connecting outer edge P₂ and outer edge P₂' of the communicating part P to specify the external outer periphery O₂.

There are no particular limitations on the shape of the internal outer periphery of the frame structure when viewed from the thickness direction, and examples thereof may include square such as foursquare and rectangular. Similarly, the shape of the external outer periphery of the frame structure when viewed from the thickness direction is not particularly limited, and examples thereof may include square such as foursquare and rectangular.

As shown in FIG. 7B and FIG. 2B, H designates the height of the intermediate member 20. Also, as shown in FIG. 2B, S₁ designates a surface of the battery 10 that faces to one surface of the intermediate member 20, and S₂ designates a surface of the battery 10 that faces the other surface of the intermediate member 20. Also, Rz₁ designates the maximum height Rz in the surface S₁ of the battery 10, and Rz₂ designates the maximum height Rz in the surface S₂ of the battery 10. The maximum height Rz is obtained according to JIS B 0601-2001. The height H, the maximum height Rz₁ and the maximum height Rz₂ may satisfy H ≥ Rz₁ + Rz₂. Also, the height H is, for example, 0.5 mm or more and 3 mm or less.

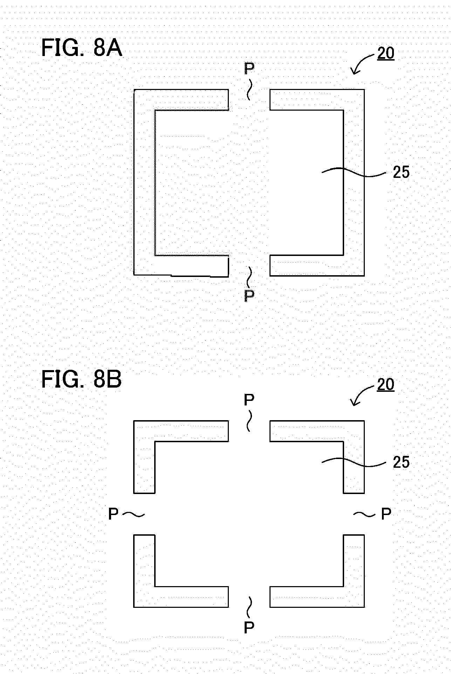

The intermediate member may include one of the communicating part that communicates the inside and the outside of the frame structure, and may include two or more thereof. In particular, in the case the battery is in a large scale, when the intermediate member includes two or more of the communicating part, the adhesive agent can be uniformly injected into the inside of the frame structure. For example, as shown in FIG. 8A, the intermediate member 20 may include two of the communicating part P arranged to face to each other. Also, for example, as shown in FIG. 8B, the intermediate member 20 may include the communicating part P respectively in each side configuring the frame structure.

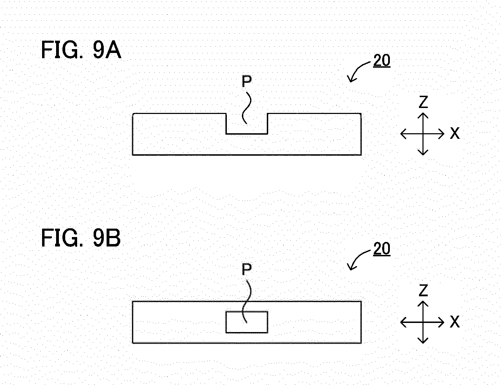

As shown in FIG. 7B, the communicating part P may be a notch part that penetrates the intermediate member 20 in the thickness direction Z. Also, as shown in FIG. 9A, the communicating part P may be a groove part configuring an open cross-section viewed from a direction orthogonal to the thickness direction Z. Also, as shown in FIG. 9B, the communicating part P may be a hollow part configuring a closed cross-section viewed from a direction orthogonal to the thickness direction Z.

As shown in FIG. 1B, the intermediate member 20 is arranged between a pair of the battery 10 (battery 10A and battery 10B) adjacent to each other in the thickness direction Z. When viewed from the thickness direction Z, the external outer periphery O₂ of the intermediate member 20 is usually arranged inside the outer periphery of the pair of the battery 10 (battery 10A and battery 10B) adjacent to each other. Also, when viewed from the thickness direction Z, S_{α} designates an area where the pair of the battery 10 overlaps with each other, and S_{β} designates an area of the inside of the frame structure in the intermediate member 20. The rate of the S_{β} with respect to the S_{α}, which is S_{β}/S_{α} is, for example, 50% or more, may be 70% or more, and may be 90% or more. Meanwhile, the S_{β}/S_{α}, is usually less than 100%.

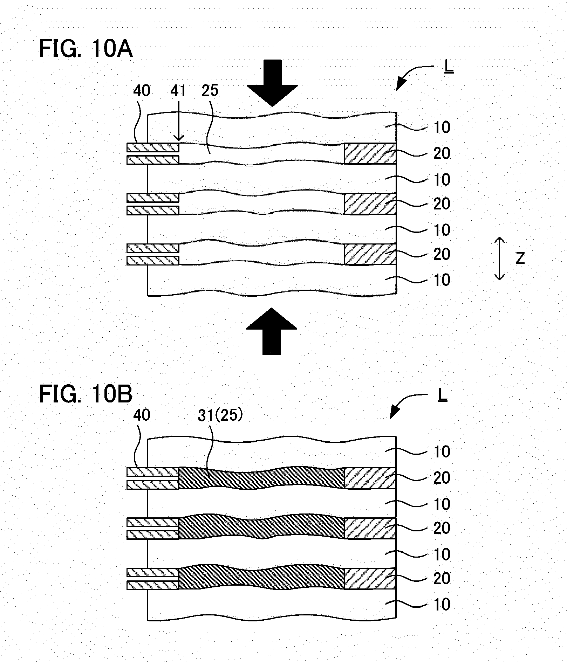

As shown in FIG. 10A, layered body L may include a plurality of battery 10 arranged in a thickness direction Z, and a plurality of intermediate member 20 respectively arranged between a pair of the battery 10 adjacent to each other. The number of the battery in the layered body is usually two or more, may be three or more, and may be four or more. Also, the number of the intermediate member in the layered body is, for example, M - 1, when the number of the battery in the layered body is M.

### 3. Joining step

The joining step in the present disclosure is a step of joining the pair of the battery in the layered body using an adhesive agent. The joining step includes at least an injecting treatment of injecting the adhesive agent into the inside of the frame structure via the communicating part. Also, the joining step may include at least one of a curing treatment and a degassing treatment described later.

The joining step is usually performed in a state the intermediate member and the pair of the battery respectively arranged on the both surfaces of the intermediate member are adhered. The intermediate member and the pair of the battery are preferably adhered in a state a pressure force is applied to the thickness direction. In other words, on the occasion of the joining step, the layered body is preferably in a state a pressure force is applied to the thickness direction. Meanwhile, the intermediate member and the pair of the battery may be adhered by their own weight.

### (1) Injecting treatment

The injecting treatment in the present disclosure is a treatment of injecting the adhesive agent into the inside of the frame structure via the communicating part. On the occasion of the injecting treatment, the layered body is preferably in a state a pressure force is applied to the thickness direction. The reason therefor is to obtain a battery module in which batteries are joined well.

It is preferable that the adhesive agent contains an adhesive resin. Examples of the adhesive resin may include a curable resin such as a thermosetting resin and an ultraviolet curable resin; and a thermoplastic resin, and among them, the thermosetting resin is preferable. The thermosetting resin may be a heat curing resin and may be a normal temperature curing resin. Also, the thermosetting resin may be a resin of one liquid type, and may be a resin of two-liquid mixture type. Examples of the thermosetting resin may include an epoxy-based resin, a urethane-based resin, and a silicone-based resin. Also, the viscosity of the adhesive agent is not particularly limited, and is appropriately selected according to the height of the intermediate member (space between a pair of the battery).

Examples of the method for injecting the adhesive agent into the inside of the frame structure may include a method using a nozzle. For example, the layered body L shown in FIG. 10A includes a plurality of battery 10 arranged in a thickness direction Z; and a plurality of intermediate member 20 respectively arranged between a pair of the battery 10 adjacent to each other. Also, nozzle 40 is respectively arranged between a pair of the battery 10 adjacent to each other. The intermediate member 20 includes, as shown in FIGS. 1A to 1C, a frame structure including a communicating part P. Also, as shown in FIG. 10A, the nozzle 40 is inserted to the communicating part (not illustrated) of the intermediate member 20, and tip 41 of the nozzle 40 is inserted until inside 25 of the frame structure. Next, as shown in FIG. 10B, adhesive agent 31 is injected into the inside 25 of the frame structure via the nozzle 40. For example, when the adhesive agent 31 is a thermosetting resin, an adhesive agent layer is formed by performing the later described curing treatment.

When V₃ designates the volume of the inside of the frame structure, and V₂ designates the volume of the adhesive agent to be injected in the injecting treatment, a rate of V₂ with respect to V₃, which is V₂/V₃ is, for example, 50% or more, may be 70% or more, and may be 90% or more. Meanwhile, the V₂/V₃ is, for example, 100% or less.

### (2) Curing treatment

The curing treatment in the present disclosure is a treatment of curing the adhesive agent after the injecting treatment. The curing treatment is usually a treatment performed when the adhesive agent contains a thermosetting resin. On the occasion of the curing treatment, it is preferable that the layered body is in a state a pressure force is applied to the thickness direction. The reason therefor is to obtain a battery module in which batteries are joined well.

The conditions for the curing treatment are not particularly limited, and appropriately selected according to the kind of the adhesive agent. Also, when the adhesive agent contains a thermosetting resin, it is preferable that the adhesive agent is cured by a heat generated by charge or discharge of the battery. The reason therefor is to shorten the production process. For example, the battery may be charged and discharged for the purpose of output inspection of the battery. Heat will be generated by the charge and discharge of the battery, and if the heat generated is utilized to cure the adhesive agent, the production process can be shortened.

### (3) Degassing treatment

The degassing treatment in the present disclosure is a treatment of degassing the inside via the communicating part before the injecting treatment. When the degassing treatment is performed, injection of the adhesive agent will be smooth. Also, on the occasion of the degassing treatment, it is preferable that the layered body is in a state a pressure force is applied to the thickness direction. The reason therefor is to prevent gas from flowing into the inside of the intermediate member during the degassing treatment.

Examples of the method for degassing the inside of the intermediate member may include a method using a nozzle. For example, as shown in FIG. 10A, it is preferable that the inside 25 of the frame structure is degassed via the nozzle 40 inserted to the communicating part (not illustrated) of the intermediate member 20. The nozzle is, for example, connected to a vacuum pump via a piping. Also, the nozzle to be used in the degassing treatment and the nozzle used in the above described injecting treatment may be the same.

In the present disclosure, the volume of the adhesive agent to be injected in the injecting treatment is preferably adjusted according to the volume of the gas degassed in the degassing treatment. For example, as shown in FIG. 10A, since there is unevenness on the surface of the battery 10, the volume of the inside 25 of the frame structure also varies. When a fixed amount of the adhesive agent is injected to the inside 25 of which volume varies, joining deterioration may be caused due to lack of the adhesive agent, and the adhesive agent may be stuck out due to excessive adhesive agent. In contrast, by adjusting the volume of the adhesive agent to be injected according to the volume of the gas degassed, an appropriate amount of the adhesive agent can be injected into the inside of the frame structure.

The volume of the gas degassed in the degassing treatment is regarded as V₁, and the volume of the adhesive agent to be injected in the injecting treatment is regarded as V₂. The V₁ and the V₂ preferably satisfy V₂ ≤ V₁. The V₁ may be, for example, obtained by the following method. First, gas amount Δn degassed is calculated from the flow amount and time in the degassing treatment. Next, with the calculated Δn and a pressure difference ΔP of before and after degassing, V₁ = RT * Δn / ΔP is calculated. Also, the V₂ may be, for example, obtained based on a flow amount of the adhesive agent and the time ejected from the nozzle. Also, the V₂/V₁ is, for example, 0.5 or more, may be 0.7 or more, and may be 0.9 or more. Meanwhile, the V₂/V₁ is, for example, 1.0 or less.

### (4) Adhesive agent layer

In the joining step, an adhesive agent layer that joins a pair of the battery is formed inside the frame structure. The thickness of the adhesive agent layer is usually the same as the thickness of the intermediate member. Also, when Sₐ designates an area of the inside of the frame structure and S_{b} designates an area of the adhesive agent layer viewed from the thickness direction, the rate of S_{b} with respect to Sₐ, which is S_{b}/Sₐ is, for example, 50% or more, may be 70% or more, and may be 90% or more. Meanwhile, the S_{b}/Sₐ is usually 100% or less.

### 4. Battery module

The battery module to be produced by the above descried method will be described in "B. Battery module" later.

### B. Battery module

As shown in FIG. 1C, battery module 100 in the present disclosure includes: a plurality of battery 10 arranged in a thickness direction Z; and intermediate member 20 arranged between a pair of the battery 10 (10A, 10B) adjacent to each other in the thickness direction Z. Also, as shown in FIG. 1A, the intermediate member 20 includes a frame structure when viewed from the thickness direction Z. Also, the intermediate member 20 includes communicating part P that communicates an inside and an outside of the frame structure. Also, the battery module 100 includes adhesive agent layer 30 that joins the pair of the battery 10, in the inside of the frame structure.

According to the present disclosure, the intermediate member including the frame structure is used and the adhesive agent layer is formed inside the frame structure, and thus the batteries may be joined well in the battery module.

### 1. Battery

The battery in the present disclosure is in the same contents as those described in "A. Method for producing battery module" above; thus, the descriptions herein are omitted.

### 2. Intermediate member

The intermediate member in the present disclosure is arranged between a pair of the battery adjacent to each other in the thickness direction. Also, the intermediate member includes a frame structure when viewed from the thickness direction. Also, the intermediate member includes a communicating part that communicates an inside and an outside of the frame structure. The intermediate member is in the same contents as those described in "A. Method for producing battery module"; thus, the descriptions herein are omitted.

### 3. Adhesive agent layer

The battery module in the present disclosure includes an adhesive agent layer that joins the pair of the battery, in the inside of the frame structure. The adhesive agent layer usually contains at least an adhesive agent. The adhesive agent is in the same contents as those described in "A. Method for producing battery module; thus, the descriptions herein are omitted.

### 4. Battery module

Examples of the applications of the battery module in the present disclosure may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery pack in the present disclosure may be used as a power source for moving bodies other than vehicles (such as rail road transportation, vessel and airplane), and may be used as a power source for electronic products such as information processing equipment.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

### Reference Sings List

- 1: current collector
- 2: cathode active material layer
- 3: anode active material layer
- 4: separator
- E: electrode
- BP: bipolar electrode
- U: power generating unit
- 10: battery
- 20: intermediate member
- 30: adhesive agent layer
- 100: battery module

## Claims

1. A method for producing a battery module, the method **characterized by** comprising:
a preparing step of preparing a plurality of battery;
a layered body forming step of forming a layered body by arranging an intermediate member between a pair of the battery adjacent to each other in a thickness direction; and
a joining step of joining the pair of the battery in the layered body using an adhesive agent, wherein
the intermediate member includes a frame structure when viewed from the thickness direction;
the intermediate member includes a communicating part that communicates an inside and an outside of the frame structure; and
the joining step includes an injecting treatment of injecting the adhesive agent into the inside of the frame structure via the communicating part.

2. The method for producing a battery module according to claim 1, **characterized in that**
the joining step includes a degassing treatment of degassing the inside via the communicating part before the injecting treatment; and
when V₁ designates a volume of a gas degassed by the degassing treatment and V₂ designates a volume of the adhesive agent to be injected by the injecting treatment, the V₁ and the V₂ satisfy V₂ ≤ V₁.

3. The method for producing a battery module according to claim 1, **characterized in that**
the adhesive agent contains a thermosetting resin;
the joining step includes a curing treatment of curing the adhesive agent after the injecting treatment; and
the curing treatment is a treatment of curing the adhesive agent by a heat generated by charging or discharging of the battery.

4. The method for producing a battery module according to claim 1, **characterized in that** the pair of the battery in the layered body are electronically connected to each other interposing the intermediate member.

5. The method for producing a battery module according to claim 1, **characterized in that** the battery includes a plurality of electrode layered in the thickness direction, and includes a bipolar electrode as the electrode.

6. The method for producing a battery module according to claim 1, **characterized in that**
a shape of the battery in a plan view when viewed from the thickness direction is a square; and
a length of each side configuring the square is 30 cm or more.

7. The method for producing a battery module according to claim 1, **characterized in that** the battery includes a plurality of electrode layered in the thickness direction, and a laminate-type outer package that seals the plurality of electrode.

8. A battery module **characterized by** comprising:
a plurality of battery arranged in a thickness direction; and
an intermediate member arranged between a pair of the battery adjacent to each other in the thickness direction, wherein
the intermediate member includes a frame structure when viewed from the thickness direction;
the intermediate member includes a communicating part that communicates an inside and an outside of the frame structure; and
the battery module includes an adhesive agent layer that joins the pair of the battery, in the inside.
